# EUROPEAN PATENT APPLICATION

(11) **EP 4 796 301 A1**
(43) Date of publication of application: **26.08.2026**
(21) Application number: 24879681.5
(22) Date of filing: 11.10.2024
(51) Int. Cl.: B29C 65/44, F16L 47/24

(54) **METHOD FOR PRODUCING PIPE WITH RESINOUS JOINT**

(30) Priority: 16.10.2023 JP 2023178177
(71) Applicant: Nichirin Co., Ltd., Kobe-shi, Hyogo 650-0033 (JP)
(72) Inventor: NAKASHIMA, Kazutoshi, Himeji-shi, Hyogo 671-0224 (JP); MASUNO, Tetsuro, Himeji-shi, Hyogo 671-0224 (JP); MAEDA, Ryuichi, Himeji-shi, Hyogo 671-0224 (JP)
(74) Representative: Zimmermann, Tankred Klaus
(86) International application number: PCT/JP2024/036534
(87) International publication number: WO 2025/084256

(57) **Abstract**

A manufacturing method of a resin-joint pipe which is a pipe with a resin joint comprises: a pretreatment process of performing a roughening process for an outer surface of an end portion 11E of a metal pipe 11; a first attachment process of attaching a resin joint 12 to the end portion 11E subjected to the roughening process; a heating process of heating an attachment portion between the metal pipe 11 and the resin joint 12 while the resin joint 12 is attached to the metal pipe 11; a pressing process of pressing the resin joint 12 inward toward the metal pipe 11 from the outside of the resin joint 12; a cooling process of cooling the resin joint 12; and a second attachment process of attaching a reinforcement member 13 to an outer surface portion of the resin joint 12 after cooling the resin joint 12. A linear expansion coefficient of the reinforcement member 13 is smaller than that of the resin joint 12.

## Description

### [Technical Field]

The present invention relates to a method of manufacturing a pipe with a resin joint.

### [Background Art]

There has been a method for joining different types of materials with high joining strength or high sealing performance. For example, Patent Literature 1 discloses a method for joining a metal formed body with a resin formed body. In the method of Patent Literature 1, a surface of the metal formed body is roughened, and then a surface which is of the resin formed body and which corresponds to a first roughened surface portion is fused with the first roughened surface portion while the first roughened surface portion is pressure-bonded to the resin formed body.

### [Citation List]

### [Patent Literatures]

[Patent Literature 1] Japanese Laid-Open Patent Publication No. 2022-30445

### [Summary of Invention]

The joining of different types of materials is used also when pipes made of different types of materials are connected. For example, when a metal pipe is connected to a resin pipe, a resin joint may be used. In this case, this resin joint is joined with the metal pipe whose material is different from that of the resin joint.

For example, the above-described structure may be applied to a vehicle pipe used in a vehicle. In this case, the temperature is high in the vehicle, and fluid such as a refrigerant of a vehicle air conditioner flows in the vehicle pipe at high pressure for a long time. Even in such a difficult situation, the high sealing performance is desired to be maintained at a junction between different types of materials such as the resin joint and the metal pipe.

The inventors of the present application manufactured a pipe with a resin joint (hereinafter, this will be referred to as a resin-joint pipe) by roughening a surface of a metal pipe and attaching a resin joint to a roughened part of the metal pipe in a similar manner as the method of Patent Literature 1. An experiment with this resin-joint pipe was performed on the assumption of the difficult situation in the vehicle. This found that fluid flowing in a pipe leaked out from a position between the resin joint and the metal pipe.

An object of the present invention is to provide a manufacturing method of a pipe with a resin joint and high sealing performance.

### [Solution to Problem]

The present specification discloses a manufacturing method of a resin-joint pipe in which the resin joint is joined with a metal pipe. This manufacturing method comprises: a pretreatment process of performing a roughening process for an outer surface of an end portion of the metal pipe; a first attachment process of attaching the cylindrical resin joint to the end portion of the metal pipe subjected to the roughening process; a heating process of heating an attachment portion between the metal pipe and the resin joint while the resin joint is attached to the end portion of the metal pipe; a pressing process of pressing the resin joint inward toward the metal pipe from the outside of the resin joint while the attachment portion between the metal pipe and the resin joint is heated; a cooling process of cooling the resin joint after pressing the resin joint inward toward the metal pipe; and a second attachment process of attaching a reinforcement member to an outer surface portion of the resin joint on the outside of the end portion of the metal pipe after cooling the resin joint, and the linear expansion coefficient of the reinforcement member being smaller than the linear expansion coefficient of the resin joint.

In the present specification, the "pipe" indicates a cylindrical member. In the present specification, the "pipe" also indicates a so-called "hose" and "tube" in addition to a so-called "pipe".

In the above-described method, while the attachment portion between the metal pipe and the resin joint is heated, the resin joint is pressed inward toward the metal pipe from the outside of the resin joint. Because of this, the resin joint enters recesses on the roughened outer surface of the end portion of the metal pipe. As a result, while there is scarcely a gap between the resin joint and the end portion of the metal pipe, the resin joint is closely in contact with the end portion of the metal pipe. While (i) there is scarcely a gap between the resin joint and the end portion of the metal pipe and (ii) the resin joint is closely in contact with the end portion of the metal pipe, the resin joint is cooled and solidified. After the resin joint is solidified in this state, the reinforcement member is attached. In this regard, the reinforcement member is not attached to the resin joint until the resin joint is solidified in this state.

Because of this, even when the resin-joint pipe is used at a high temperature, the resin joint expands, and then the temperature is decreased so that the resin joint shrinks, there is scarcely a gap between the resin joint and the reinforcement member. Because the linear expansion coefficient of the reinforcement member is smaller than that of the resin joint, the reinforcement member suppresses the outward expansion of the resin joint at a high temperature. Therefore, there is scarcely the gap between the resin joint and the reinforcement member. As a result, even when the resin joint is softened at a high temperature, the resin joint is suppressed from being peeled off from the metal pipe. Because of this, fluid flowing in the metal pipe is unlikely to leak out through the gap between the metal pipe and the resin joint.

This makes it possible to obtain the resin-joint pipe with high sealing performance between the metal pipe and the resin joint.

In the above-described heating process, the attachment portion between the metal pipe and the resin joint may be heated as the metal pipe is heated by a heating device.

In the above-described method, while the attachment portion between the metal pipe and the resin joint is heated, a part which is of the resin joint and which does not oppose the metal pipe, e.g., (i) the outer surface portion of the resin joint and (ii) a part which is of the resin joint and to which another pipe is connected are suppressed from being heated.

The reinforcement member may be a cylindrical member.

When the reinforcement member is the cylindrical member, the outer surface of the resin joint is covered by the reinforcement member. Because of this, the resin joint is unlikely to be peeled off from the metal pipe. This further enhances the sealing performance between the resin joint and the metal pipe.

In the second attachment process, the reinforcement member may be pressed toward the resin joint in a radial direction of the resin joint so that an inner surface of the reinforcement member is closely in contact with an outer surface of the resin joint.

This simple way makes the resin joint unlikely to be peeled off from the metal pipe.

From another perspective, in the second attachment process, the reinforcement member whose inner diameter is equal to or smaller than the outer diameter of the resin joint may be pushed into the resin joint in an axial direction of the resin joint so that the reinforcement member is located outside the resin joint, and accordingly an inner surface of the reinforcement member may be closely in contact with an outer surface of the resin joint.

This simple way makes the resin joint unlikely to be peeled off from the metal pipe.

From another perspective, an outer surface of the resin joint may be at least partially tapered so that the outer diameter of the outer surface of the resin joint at least partially increases toward one end of the resin joint in the axial direction, the reinforcement member may be a cylindrical member, an inner surface of the reinforcement member may be at least partially tapered so that the inner diameter of the inner surface of the reinforcement member at least partially increases toward one end of the reinforcement member in the axial direction, and in the second attachment process, the reinforcement member may be pushed toward the resin joint so that (i) a direction in which the outer diameter of the resin joint increases is the same as a direction in which the inner diameter of the reinforcement member increases in the axial direction of the resin joint and (ii) the reinforcement member is located outside the resin joint, and accordingly the inner surface of the reinforcement member may be closely in contact with the outer surface of the resin joint.

This simple way makes the resin joint unlikely to be peeled off from the metal pipe.

The metal pipe and the resin joint may be circular cylindrical in shape. When the metal pipe and the resin joint are circular cylindrical in shape, the resin joint may be pressed inward toward the end portion of the metal pipe from the outside of the resin joint in the radial direction of the resin joint in the pressing process while the attachment portion between the metal pipe and the resin joint is heated. Especially, when (i) the outer diameter and inner diameter of each of the metal pipe and the resin joint are constant and (ii) the metal pipe and the resin joint are circular cylindrical in shape, the resin joint may be pressed inward toward the metal pipe from the outside of the resin joint in the radial direction of the resin joint in the pressing process while the attachment portion between the metal pipe and the resin joint is heated.

When the metal pipe and the resin joint are circular cylindrical in shape, the resin joint is radially pressed while the attachment portion between the metal pipe and the resin joint is heated. Because of this, there is scarcely a gap between the resin joint and the end portion of the metal pipe subjected to the roughening process, and the resin joint is closely in contact with the end portion of the metal pipe subjected to the roughening process. When (i) the outer diameter and inner diameter of each of the metal pipe and the resin joint are constant and (ii) the metal pipe and the resin joint are circular cylindrical in shape, the above-described method is further effective.

When the metal pipe and the resin joint are circular cylindrical in shape, the reinforcement member is also preferably circular cylindrical in shape. In this case, because the outer circumferential surface of the resin joint is entirely covered by the reinforcement member in the circumferential direction, the resin joint is unlikely to be peeled off from the metal pipe.

### [Advantageous Effects of Invention]

The above-described method provides a manufacturing method of a resin-joint pipe (pipe with a resin joint) with high sealing performance.

### [Brief Description of Drawings]

FIG. 1 is a front view of an example of a pipe with a resin joint (this will be referred to as a resin-joint pipe) and another pipe.
FIG. 2 is an example cross section of the resin-joint pipe and another pipe.
FIG. 3 shows a pretreatment process in a manufacturing method of a resin-joint pipe of First Embodiment.
FIG. 4 shows a state after the pretreatment process in the manufacturing method of the resin-joint pipe of First Embodiment.
FIG. 5 shows a first attachment process in the manufacturing method of the resin-joint pipe of First Embodiment.
FIG. 6 shows a heating process in the manufacturing method of the resin-joint pipe of First Embodiment.
FIG. 7 shows a pressing process in the manufacturing method of the resin-joint pipe of First Embodiment.
FIG. 8 shows a cooling process in the manufacturing method of the resin-joint pipe of First Embodiment.
FIG. 9 shows a state after the cooling process in the manufacturing method of the resin-joint pipe of First Embodiment.
FIG. 10 shows a second attachment process in the manufacturing method of the resin-joint pipe of First Embodiment.
FIG. 11 shows a state after a cooling process in a manufacturing method of a resin-joint pipe of Second Embodiment.
FIG. 12 shows a second attachment process in the manufacturing method of the resin-joint pipe of Second Embodiment.
FIG. 13 shows a state after a pretreatment process in a manufacturing method of a resin-joint pipe of Third Embodiment.
FIG. 14 shows a heating process in the manufacturing method of the resin-joint pipe of Third Embodiment.
FIG. 15 shows a pressing process in the manufacturing method of the resin-joint pipe of Third Embodiment.
FIG. 16 shows a state after a cooling process in the manufacturing method of the resin-joint pipe of Third Embodiment.
FIG. 17 shows a second attachment process in the manufacturing method of the resin-joint pipe in Third Embodiment.

### [Description of Embodiments]

### [First Embodiment]

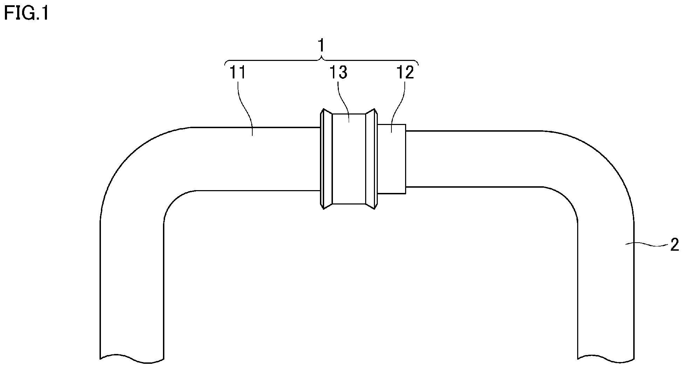

FIG. 1 shows a state in which a resin-joint pipe 1 which is a pipe with a resin joint and another pipe 2 are connected. The resin-joint pipe 1 and the pipe 2 are used as, e.g., vehicle pipes. Examples of the vehicle pipes include air-conditioning pipes, fuel pipes, and the like.

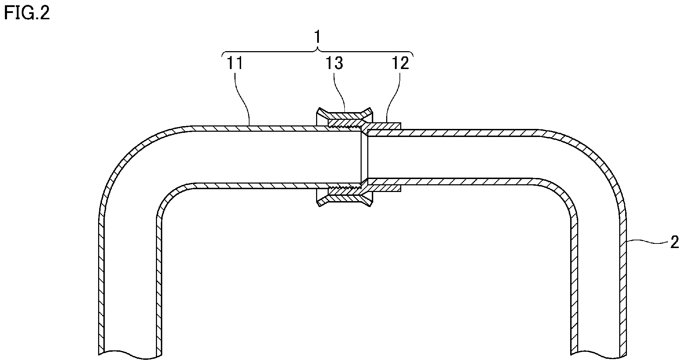

As shown in FIG. 1 and FIG. 2, the resin-joint pipe 1 includes a metal pipe 11, a resin joint 12, and a reinforcement member 13. As shown in FIG. 2, the metal pipe 11 communicates with the pipe 2. The resin joint 12 connects the metal pipe 11 to the pipe 2. The pipe 2 is, e.g., a resin pipe.

The metal pipe 11 is cylindrical in shape. The metal pipe 11 may be, e.g., circular or square cylindrical in shape. Although the metal pipe 11 is curved in FIG. 1, the shape of the metal pipe 11 may be changed.

A "cylindrical" member indicates a member with a hole penetrating this member in an axial direction. The shape of the hole penetrating the member in the axial direction may be constant along an area extending from one end to the other end of the member in the axial direction, or the shape of one part of this hole may be different from that of another part of the hole in the axial direction. The outer shape and inner shape of the "cylindrical" member in the area extending from one end to the other end of the member in the axial direction may be made of the same material, or the outer shape and/or inner shape of one part of the "cylindrical" member may be different from the outer shape and/or inner shape of another part of the "cylindrical" member. For example, when the member is "circular cylindrical" in shape, the outer diameter of the member may be constant along the area extending from one end to the other end of the member in the axial direction, the inner diameter of the member may be constant along the area extending from one end to the other end of the member in the axial direction, the outer diameter of one part of the member in the axial direction may be different from that of the rest of the member in the axial direction, and the inner diameter of one part of the member in the axial direction may be different from that of the rest of the member in the axial direction.

A material of the metal pipe 11 is metal. Examples of the material of the metal pipe 11 include iron, copper, copper alloy, aluminum, aluminum alloy, magnesium, magnesium alloy, and stainless steel.

As shown in FIG. 2, the resin joint 12 is cylindrical in shape. The definition of "cylindrical" is the same as in a case of the metal pipe 11. The resin joint 12 may be, e.g., circular or square cylindrical in shape. When the metal pipe 11 is circular cylindrical in shape, the resin joint 12 is circular cylindrical in shape. When the metal pipe 11 is square cylindrical in shape, the resin joint 12 is square cylindrical in shape.

A material of the resin joint 12 is, e.g., a thermoplastic resin, an elastomer, or the like. Examples of the thermoplastic resin include polyamide (PA), polyethylene (PE), polypropylene (PP), polystyrene (PS), acrylonitrile/styrene resin (AS), acrylonitrile/butadiene/styrene resin (ABS), methacrylic resin (PMMA), and chloroethylene (PVC). Examples of the elastomer include a thermoplastic elastomer. The resin joint 12 may include an additive such as a filler and a flame retardant.

The reinforcement member 13 shown in FIG. 1 and FIG. 2 is cylindrical in shape. The definition of "cylindrical" is the same as in the case of the metal pipe 11. The reinforcement member 13 may be, e.g., circular or square cylindrical in shape. When the resin joint 12 is circular cylindrical in shape, the reinforcement member 13 is circular cylindrical in shape. When the resin joint 12 is square cylindrical in shape, the reinforcement member 13 is square cylindrical in shape.

A linear expansion coefficient (i.e., coefficient of linear expansion) of the reinforcement member 13 is smaller than that of the resin joint 12. The linear expansion coefficient may be referred to as a thermal expansion coefficient (i.e., coefficient of thermal expansion). A material of the reinforcement member 13 is not particularly limited as long as the linear expansion coefficient of the reinforcement member 13 is smaller than that of the resin joint 12. The material of the reinforcement member 13 may be, e.g., metal, a thermoplastic resin, a thermosetting resin, or an elastomer. For example, when the material of the reinforcement member 13 is metal, the linear expansion coefficient of the reinforcement member 13 is smaller than that of the resin joint 12. Examples of the metal include the metals used as the material of the metal pipe 11. The material of the reinforcement member 13 may be a thermoplastic resin, a thermosetting resin, an elastomer, or the like as long as the linear expansion coefficient of the reinforcement member 13 is smaller than that of the resin joint 12.

The following will describe a manufacturing method of the resin-joint pipe 1. Although the pipe 2 is connected to the resin joint 12 in FIG. 1, the pipe 2 may be connected to the resin joint 12 before, during, or after the manufacture of the resin-joint pipe 1.

The following will describe a case where the pipe 2 is connected to the resin joint 12 after the manufacture of the resin-joint pipe 1.

### [Pretreatment Process]

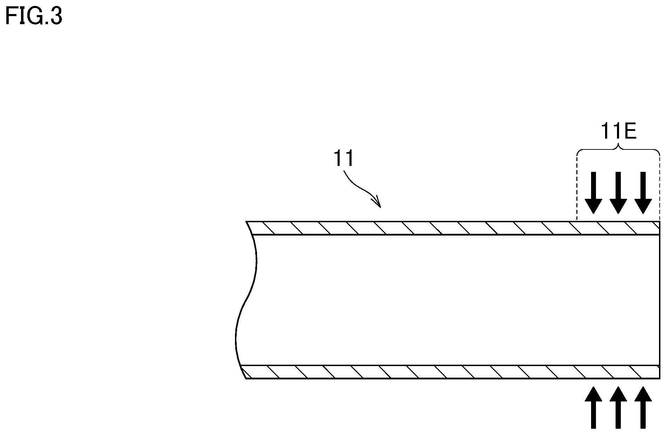

As shown in FIG. 3, the metal pipe 11 is prepared. An outer surface of an end portion 11E of the metal pipe 11 is subjected to a roughening process. The roughening process may be a known roughening process. For example, the roughening process may be performed by laser processing, polish processing, blast processing, machining, roll processing, knurl processing, or the like.

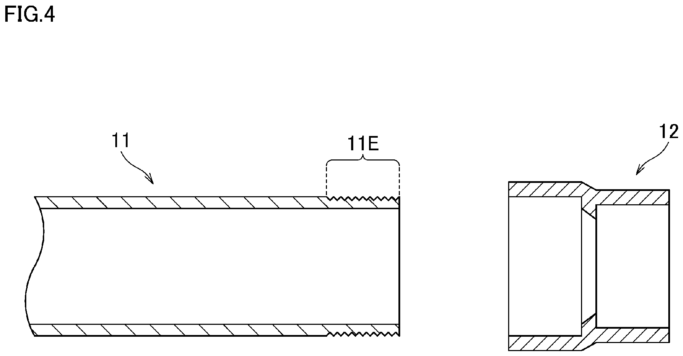

FIG. 4 shows the metal pipe 11 after the roughening process. The outer surface of the end portion 11E of the metal pipe 11 is corrugated. The roughness of the end portion 11E of the metal pipe 11 after the roughening process is not particularly limited. For example, the surface roughness Rz may be approximately 100 µm. The Rz is the maximum height roughness. The maximum height roughness (Rz) is the sum of (i) the height of the highest one (Rp) of peaks and (ii) the depth of the deepest one (Rv) of valleys on the end portion 11E subjected to the roughening process.

### [First Attachment Process]

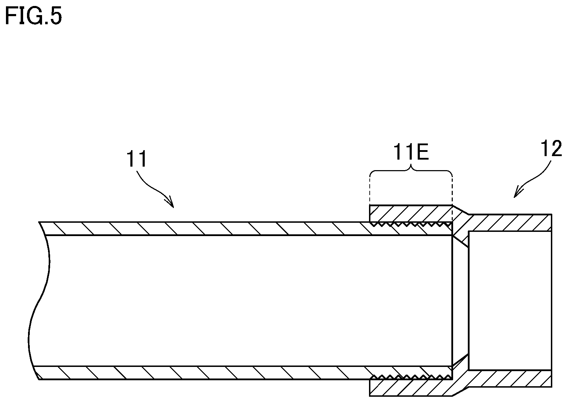

The resin joint 12 is attached to the outer surface of the end portion 11E of the metal pipe 11 shown in FIG. 4. FIG. 5 shows the resin joint 12 attached to the end portion 11E of the metal pipe 11. When the resin joint 12 is attached to the end portion 11E of the metal pipe 11, a part or all of the resin joint 12 is located outside the end portion 11E of the metal pipe 11. In other words, the end portion 11E of the metal pipe 11 is located inside a part or all of the resin joint 12. When the resin joint 12 is attached to the end portion 11E of the metal pipe 11, there is a gap between the outer surface of the end portion 11E and an inner surface of the resin joint 12.

### [Heating Process]

While the resin joint 12 is attached to the end portion 11E of the metal pipe 11, an attachment portion between the metal pipe 11 and the resin joint 12 is heated. The "attachment portion between the metal pipe 11 and the resin joint 12" indicates (i) a part which is of the metal pipe 11 and which opposes the resin joint 12 and (ii) a part which is of the resin joint 12 and which opposes the metal pipe 11. The "part which is of the metal pipe 11 and which opposes the resin joint 12" indicates the outer surface of the end portion 11E of the metal pipe 11 and its surroundings. The "part which is of the resin joint 12 and which opposes the metal pipe 11" indicates a part which is of the inner surface of the resin joint 12 and which opposes the end portion 11E of the metal pipe 11 and its surroundings.

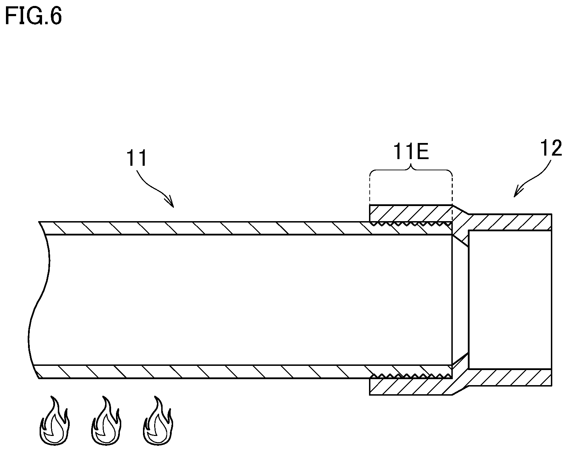

A method of heating the attachment portion between the metal pipe 11 and the resin joint 12 is not particularly limited. For example, as shown in FIG. 6, a part of the metal pipe 11 is far from the end portion 11E and heated by a heating device. As heat is transmitted to the end portion 11E from this heated part of the metal pipe 11, the end portion 11E of the metal pipe 11 is heated. The heat is transmitted from the end portion 11E of the metal pipe 11 to the inner surface which is of the resin joint 12 and which opposes the end portion 11E and its surroundings. Because of this, the attachment portion between the metal pipe 11 and the resin joint 12 is heated.

An above-described heating method and heating device are not particularly limited. A typical heating method and heating device may be used. For example, the heating device may be a heater, a burner, or a high frequency induction heating device.

The heating of the attachment portion between the metal pipe 11 and the resin joint 12 includes not only a case where the attachment portion between the metal pipe 11 and the resin joint 12 is directly heated by the heating device, but also a case where the attachment portion between the metal pipe 11 and the resin joint 12 is heated by heating a position different from the attaching portion, i.e., a case where the attachment portion between the metal pipe 11 and the resin joint 12 is not directly heated by the heating device.

As the attachment portion between the metal pipe 11 and the resin joint 12 is heated, the temperature of a part which is of the inner surface of the resin joint 12 and which opposes the metal pipe 11 and its surroundings is increased to be a melting point or softening point of the resin joint 12 or higher. As a result, this part of the inner surface of the resin joint 12 and its surroundings are melted or softened.

Preferably, when the attachment portion between the metal pipe 11 and the resin joint 12 is heated, (i) the outer surface of the resin joint 12 and its surroundings and (ii) a part which is of the resin joint 12 and to which the pipe 2 is connected as shown in FIG. 2 are preferably not heated. Even if this outer surface and this part are heated, the temperatures of this outer surface and this part are preferably less than the softening point of the resin joint 12. Because of this, the shape of the outer surface of the resin joint 12 and that of the part which is of the resin joint 12 and to which the pipe 2 is connected as shown in FIG. 2 are maintained to be the same as the shapes before heating. For example, as shown in FIG. 6, when the part which is of the metal pipe 11 and which is far from the end portion 11E is heated, the heating of (i) the outer surface of the resin joint 12 and its surroundings and (ii) the part which is of the resin joint 12 and to which the pipe 2 is connected as shown in FIG. 2 is suppressed while the attachment portion between the metal pipe 11 and the resin joint 12 is heated.

### [Pressing Process]

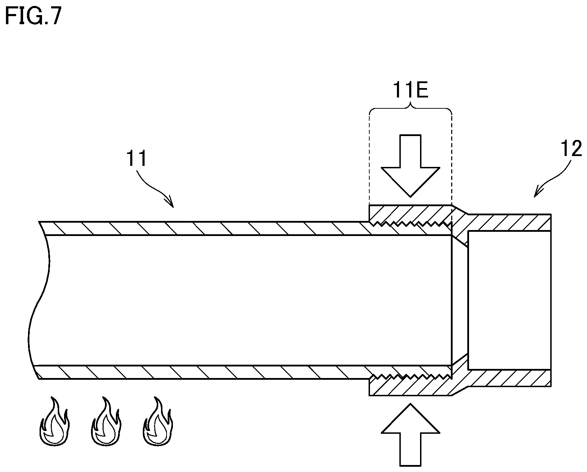

While the attachment portion between the metal pipe 11 and the resin joint 12 is heated, the resin joint 12 is pressed inward toward the end portion 11E of the metal pipe 11 from the outside of the resin joint 12. When the attachment portion between the metal pipe 11 and the resin joint 12 is heated, a part which is of the inner surface of the resin joint 12 and which opposes the metal pipe 11 and its surroundings is heated so that the temperature of this part of the inner surface of the resin joint 12 exceeds a point around the melting point or softening point of the resin joint 12. Because the attachment portion between the metal pipe 11 and the resin joint 12 is heated during the heating process, the resin joint 12 is pressed inward toward the end portion 11E of the metal pipe 11 from the outside of the resin joint 12 during the heating process. Because of this, as shown in FIG. 7, a part which is of the resin joint 12 and which opposes the metal pipe 11 is engaged with the corrugated outer surface of the end portion 11E of the metal pipe 11. Furthermore, there is scarcely a gap between the resin joint 12 and the end portion 11E of the metal pipe 11. While there is scarcely the gap between the resin joint 12 and the end portion 11E of the metal pipe 11, the resin joint 12 is closely in contact with the metal pipe 11.

### [Cooling Process]

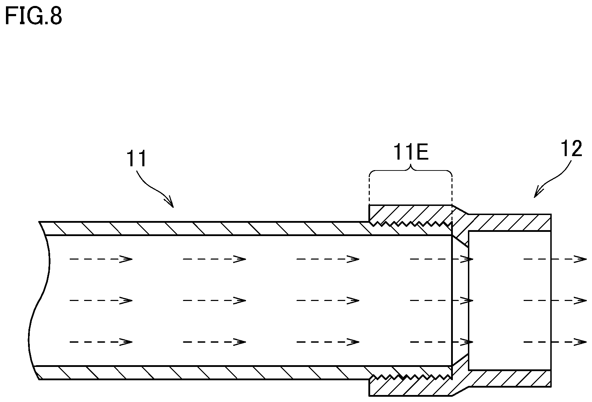

The resin joint 12 is cooled after the pressing process. For example, as shown in FIG. 8, cooling gas may flow inside the metal pipe 11. In this way, the metal pipe 11 is cooled at first. As cooling heat is transmitted from the cooled metal pipe 11 to a part which is of the resin joint 12 and which opposes the metal pipe 11, the part which is of the resin joint 12 and which opposes the metal pipe 11 is cooled. Because of this, the resin joint 12 is solidified while entering the corrugated end portion 11E of the metal pipe 11. While (i) there is scarcely the gap between the resin joint 12 and the end portion 11E of the metal pipe 11 and (ii) the resin joint 12 is closely in contact with the metal pipe 11, the resin joint 12 is solidified.

A cooling method is not limited to this. For example, the resin joint 12 may be cooled by cooling wind blown from the outside of the resin joint 12. Alternatively, the metal pipe 11 and the resin joint 12 may be left to cool the resin joint 12 naturally to an ambient temperature.

### [Second Attachment Process]

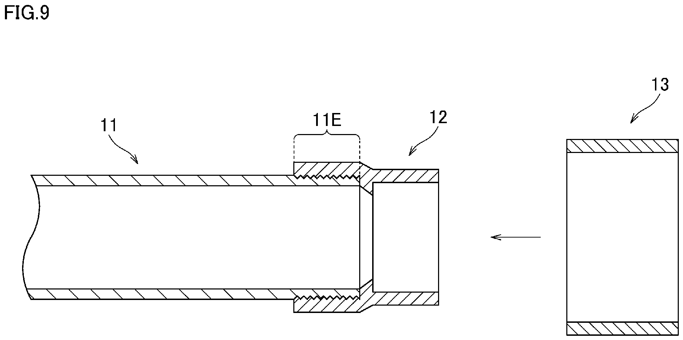

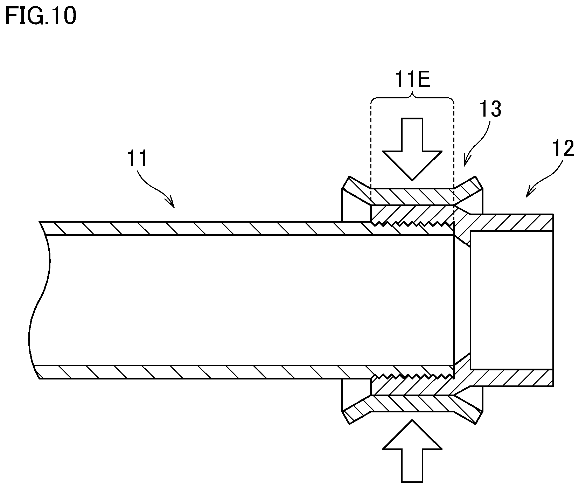

The reinforcement member 13 is attached to the resin joint 12 after the cooling process. An attachment method is not particularly limited. For example, the cylindrical reinforcement member 13 shown in FIG. 9 is located outside the resin joint 12. Preferably, the resin joint 12 is closely in contact with the reinforcement member 13 while there is scarcely a gap between the resin joint 12 and the reinforcement member 13. For example, as shown in FIG. 10, the reinforcement member 13 is pressed inward toward the resin joint 12. Because of this, while there is scarcely the gap between the resin joint 12 and the reinforcement member 13, the resin joint 12 is closely in contact with the reinforcement member 13. When the reinforcement member 13 is attached to the resin joint 12, the reinforcement member 13 is not detached from the resin joint 12.

The resin-joint pipe 1 is obtained in this way. As the pipe 2 shown in FIG. 2 is connected to the resin joint 12, the metal pipe 11 is connected to the pipe 2. When the pipe 2 is a resin pipe, the resin joint 12 and the pipe 2 are connected by, e.g., laser welding, etc.

When the resin-joint pipe 1 is manufactured in this way, the following effects are achieved.

As shown in FIG. 7, while the attachment portion between the metal pipe 11 and the resin joint 12 is heated, the resin joint 12 is pressed inward toward the end portion 11E of the metal pipe 11 from the outside of the resin joint 12. Because of this, the melted or softened resin joint 12 is engaged with recesses on the roughened outer surface of the end portion 11E of the metal pipe 11. As a result, while there is scarcely a gap between the resin joint 12 and the end portion 11E of the metal pipe 11, the resin joint 12 is closely in contact with the end portion 11E of the metal pipe 11.

When (i) the attachment portion between the end portion 11E of the metal pipe 11 and the resin joint 12 is heated and (ii) the resin joint 12 is not pressed during heating of this attachment portion, the above-described arrangement is not available. When the attachment portion between the end portion 11E of the metal pipe 11 and the resin joint 12 is just heated, the melted or softened resin joint 12 is not engaged with any of recesses on the outer surface of the end portion 11E of the metal pipe 11. Even if the melted or softened resin joint 12 is engaged with these recesses, there is a gap between the resin joint 12 and the recesses. Therefore, when the attachment portion between the end portion 11E of the metal pipe 11 and the resin joint 12 is just heated, (i) there is the gap between the resin joint 12 and the end portion 11E of the metal pipe 11 and (ii) the resin joint 12 is not closely in contact with the end portion 11E of the metal pipe 11.

The resin joint 12 is cooled after being pressed. Because of this, while (i) there is scarcely a gap between the resin joint 12 and the end portion 11E of the metal pipe 11 and (ii) the resin joint 12 is closely in contact with the end portion 11E of the metal pipe 11, the resin joint 12 is solidified. After the resin joint 12 is solidified in this state, the reinforcement member 13 is attached to the resin joint 12. In this regard, the reinforcement member 13 is not attached to the resin joint 12 until the resin joint 12 is solidified in this state.

Because of this, even when the resin-joint pipe 1 is used at a high temperature, the resin joint 12 expands, and then the temperature is decreased so that the resin joint 12 shrinks, there is scarcely a gap between the resin joint 12 and the reinforcement member 13. Because the linear expansion coefficient of the reinforcement member 13 is smaller than that of the resin joint 12, the reinforcement member 13 suppresses the outward expansion of the resin joint 12 at a high temperature. Therefore, there is scarcely the gap between the resin joint 12 and the reinforcement member 13. Accordingly, there is also scarcely a gap between the resin joint 12 and the metal pipe 11. As a result, even when the resin joint 12 is softened at a high temperature, the resin joint 12 is suppressed from being peeled off from the metal pipe 11. This suppresses fluid flowing in the metal pipe 11 from leaking out through the gap between the metal pipe 11 and the resin joint 12.

A later-described experiment found that the fluid flowing in the metal pipe 11 was suppressed from leaking out through the gap between the metal pipe 11 and the resin joint 12 even when the high-pressure fluid flowed in the metal pipe 11 at a high temperature.

As described above, a method of the present embodiment makes it possible to manufacture the resin-joint pipe 1 with high sealing performance between the metal pipe 11 and the resin joint 12 as compared to known methods.

As shown in FIG. 10, the reinforcement member 13 is closely in contact with the resin joint 12 so that there is scarcely a gap between the reinforcement member 13 and the resin joint 12 simply by pressing the reinforcement member 13 toward the resin joint 12. This simple way makes the resin joint 12 unlikely to be peeled off from the metal pipe 11.

The fluid flowing in the metal pipe 11 tends to flow into a gap between the metal pipe 11 and the resin pipe 12 from a leading end of the end portion 11E of the metal pipe 11 shown in FIG. 10. Therefore, the resin joint 12 is the most likely to be peeled off from the leading end of the end portion 11E of the metal pipe 11 and its surroundings. However, as shown in FIG. 10, the resin joint 12 and the reinforcement member 13 exist outside the leading end of the end portion 11E of the metal pipe 11 and its surroundings. Therefore, the resin joint 12 is unlikely to be peeled off from the leading end of the end portion 11E of the metal pipe 11 and its surroundings.

Because the reinforcement member 13 is cylindrical in shape, the outer surface of the resin joint 12 is covered by the reinforcement member 13. The reinforcement member 13 exists along the entire circumference of the outer surface of the resin joint 12. This further enhances the sealing performance between the metal pipe 11 and the resin joint 12. Although the resin joint 12 is likely to be peeled off from an outer surface of the leading end of the end portion 11E of the metal pipe 11 and its surroundings, the reinforcement member 13 exists along the entire circumference of the outer surface of the resin joint 12. Therefore, the resin joint 12 is unlikely to be peeled off from the metal pipe 11 even at a position where the resin joint 12 is likely to be peeled off.

The metal pipe 11 and the resin joint 12 may be circular cylindrical in shape. When the metal pipe 11 and the resin joint 12 are circular cylindrical in shape, the resin joint 12 may be radially pressed in the pressing process while the attachment portion between the metal pipe 11 and the resin joint 12 is heated. Because of this, there is scarcely a gap between the resin joint 12 and the end portion 11E of the metal pipe 11, and the resin joint 12 is closely in contact with the end portion 11E of the metal pipe 11. Especially, when the resin joint 12 is radially pressed in the pressing process while the attachment portion between the metal pipe 11 and the resin joint 12 is heated on the premise that (i) the outer diameter and inner diameter of each of the metal pipe 11 and the resin joint 12 are constant and (ii) the metal pipe 11 and the resin joint 12 are circular cylindrical in shape, this radial pressing of the resin joint 12 is effective to achieve the above-described effect.

When the metal pipe 11 and the resin joint 12 are circular cylindrical in shape, the reinforcement member 13 is also preferably circular cylindrical in shape. In this case, because an outer circumferential surface of the resin joint 12 is covered by the reinforcement member 13 along the entire circumference of the resin joint 12, the resin joint 12 is further unlikely to be peeled off from the metal pipe 11.

### [Second Embodiment]

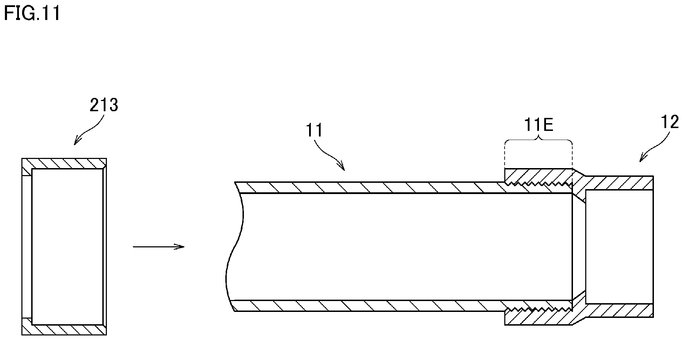

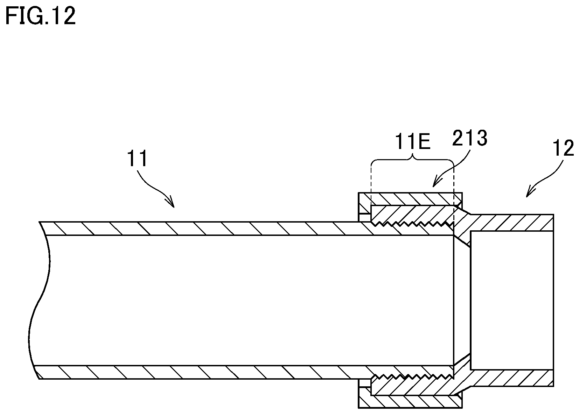

The following will describe a manufacturing method of a resin-joint pipe (pipe with a resin joint) of Second Embodiment of the present invention, with reference to FIG. 11 and FIG. 12. Second Embodiment differs from First Embodiment mainly in the second attachment process. Processes identical with those in First Embodiment described above may not be explained. Members identical with those in First Embodiment described above will be denoted by the same reference numerals, and the explanations thereof may not be repeated.

The pretreatment process, first attachment process, heating process, and cooling process of Second Embodiment are the same as those of First Embodiment. FIG. 11 shows a metal pipe 11 and a resin joint 12 which have been subjected to the cooling process and a reinforcement member 213. The following will describe a case where the metal pipe 11 and the resin joint 12 are circular cylindrical in shape.

The reinforcement member 213 is cylindrical in shape. The reinforcement member 213 may be circular or square cylindrical in shape. The following will describe a case where the reinforcement member 213 is circular cylindrical in shape. A leading end portion of the reinforcement member 213 protrudes inward. Except the leading end portion, the inner diameter of the reinforcement member 213 is smaller than the outer diameter of the resin joint 12.

### [Second Attachment Process]

As shown in FIG. 12, one surface is opposite to a leading end surface in the leading end portion of the reinforcement member 213, and the reinforcement member 213 is pushed to the resin joint 12 in an axial direction of the resin joint 12 so that (i) this surface of the leading end portion of the reinforcement member 213 opposes the resin joint 12 and (ii) the reinforcement member 213 is located outside the resin joint 12. As the leading end portion of the reinforcement member 213 is hooked and positioned by one end of the resin joint 12, the reinforcement member 213 is attached to the resin joint 12. Because the inner diameter of the reinforcement member 213 excluding the leading end portion is smaller than the outer diameter of the resin joint 12, the resin joint 12 is closely in contact with the reinforcement member 213 while there is scarcely a gap between the resin joint 12 and the reinforcement member 213. When the reinforcement member 213 is attached to the resin joint 12, the reinforcement member 213 is not detached from the resin joint 12.

In this way, similarly to First Embodiment, the resin-joint pipe with high sealing performance is obtained in Second Embodiment. The resin joint 12 is unlikely to be peeled off from the metal pipe 11 simply by pushing the reinforcement member 213 whose inner diameter is partially smaller than the outer diameter of the resin joint 12, to the resin joint 12 in the axial direction of the resin joint 12.

### [Third Embodiment]

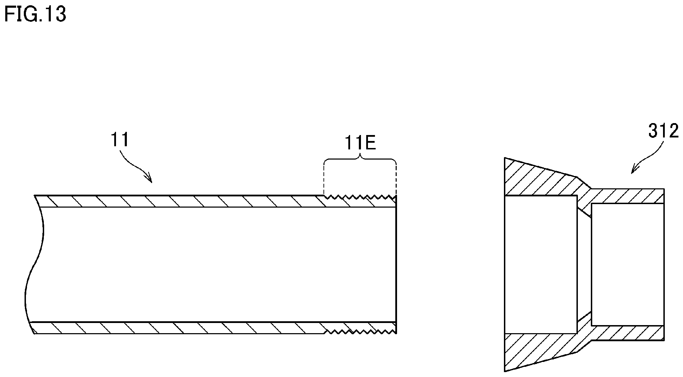

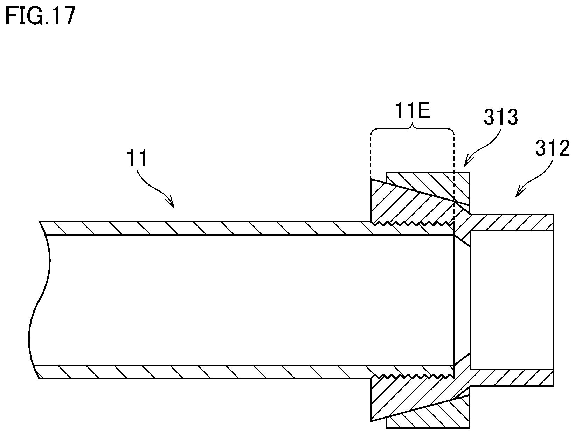

The following will describe a manufacturing method of a resin-joint pipe (pipe with a resin joint) of Third Embodiment of the present invention, with reference to FIG. 13 and FIG. 17. Third Embodiment differs from First Embodiment mainly in the second attachment process. Processes identical with those in First Embodiment described above may not be explained. Members identical with those in First Embodiment described above will be denoted by the same reference numerals, and the explanations thereof may not be repeated.

The pretreatment process of Third Embodiment is the same as that in First Embodiment. FIG. 13 shows a metal pipe 11 after the pretreatment process and a resin joint 312.

As shown in FIG. 13, the resin joint 312 is at least partially tapered so that the outer diameter of an outer surface of the resin joint 312 at least partially increases toward one end of the resin joint 312 in the axial direction. The metal pipe 11 is located inside this tapered part of the resin joint 312. The following will describe a case where (i) the outer diameter and inner diameter of the metal pipe 11 are constant and (ii) the metal pipe 11 is circular cylindrical in shape. In this case, the inner diameter of the resin joint 312 is constant, the outer diameter of the resin joint 312 changes in the axial direction, and the resin joint 312 is circular cylindrical in shape.

The first attachment process, heating process, pressing process, and cooling process of Third Embodiment are the same as those of First Embodiment. The following will describe these processes.

### [First Attachment Process]

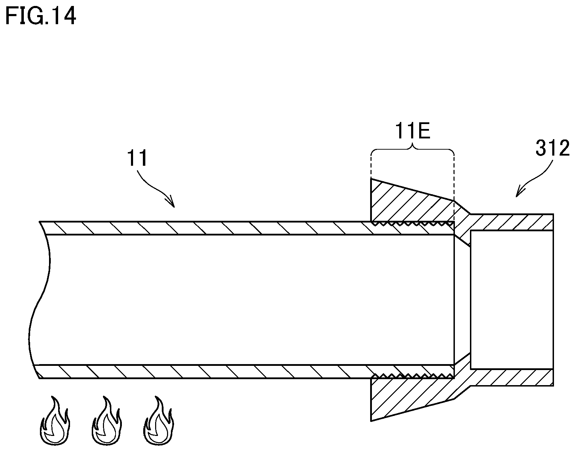

The resin joint 312 is attached to an end portion 11E of the metal pipe 11. FIG. 14 shows the resin joint 312 attached to the end portion 11E of the metal pipe 11. As shown in FIG. 14, the outer surface of the tapered part of the resin joint 312 increases away from one end of the end portion 11E of the metal pipe 11 in the axial direction of the metal pipe 11.

### [Heating Process]

While the resin joint 312 is attached to the end portion 11E of the metal pipe 11, an attachment portion between the metal pipe 11 and the resin joint 312 is heated as shown in FIG. 14.

### [Pressing Process]

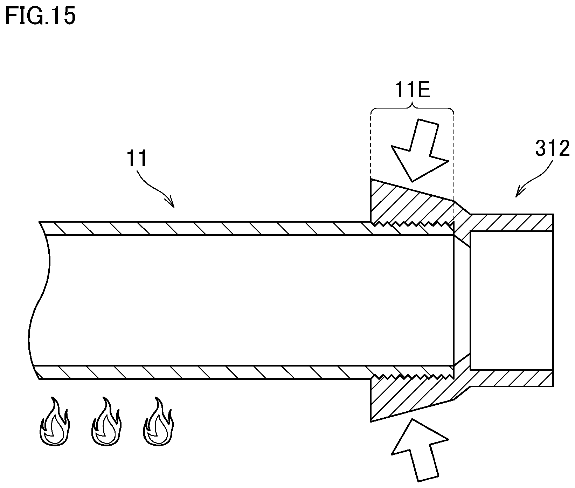

While the attachment portion between the metal pipe 11 and the resin joint 312 is heated, the resin joint 312 is pressed inward toward the end portion 11E of the metal pipe 11 from the outside of the resin joint 312. When the resin joint 312 is pressed, the resin joint 312 is pressed as shown in FIG. 15 so that the shape of a tapered outer surface of the resin joint 312 is maintained. As the resin joint 312 is pressed, the resin joint 12 is closely in contact with the metal pipe 11 while there is scarcely the gap between the resin joint 312 and the end portion 11E of the metal pipe 11.

### [Cooling Process]

The resin joint 312 is cooled after the pressing process.

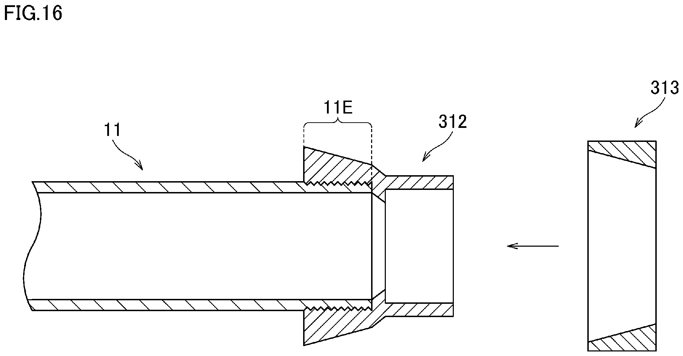

FIG. 16 shows a metal pipe 11 and the resin joint 312 which have been subjected to the cooling process and a reinforcement member 313. The reinforcement member 313 is cylindrical in shape. An inner surface of the reinforcement member 313 is tapered so that the inner diameter of the inner surface of the reinforcement member 313 increases toward one end of the reinforcement member 313 in the axial direction. The following will describe a case where (i) the inner diameter of the reinforcement member 313 changes in the axial direction and (ii) the reinforcement member 313 is circular cylindrical in shape.

### [Second Attachment Process]

As shown in FIG. 16, in the axial direction of the resin joint 312, a direction in which the outer diameter of the resin joint 312 increases is the same as a direction in which the inner diameter of the reinforcement member 313 increases. In this state, the reinforcement member 313 is pushed toward the resin joint 312 so that the reinforcement member 313 is located outside the resin joint 312. As the inner surface of the reinforcement member 313 is pushed onto the outer surface of the resin joint 312, the resin joint 312 is closely in contact with the reinforcement member 313 while there is scarcely a gap between the resin joint 312 and the reinforcement member 313. When the reinforcement member 313 is attached to the resin joint 312, the reinforcement member 313 is not detached from the resin joint 312.

In this way, similarly to First Embodiment, the resin-joint pipe with high sealing performance is obtained in Third embodiment. The resin joint 312 is unlikely to be peeled off from the metal pipe 11 simply by pushing the reinforcement member 313 toward the resin joint 312.

### [Examples]

The following will further detail the present invention with reference to Examples. However, in no case should the present invention be limited by the following Examples, and changes can be made to the present specification as long as not departing from the spirit of the present invention.

### (Experiment)

A resin-joint pipe (pipe with a resin joint) was manufactured by the manufacturing method of the resin-joint pipe of First Embodiment. Furthermore, other resin-joint pipes were manufactured by partially changing the manufacturing method of First Embodiment. The following will show the conditions and results of a test with reference to Table 1.

An aluminum pipe was used as a metal pipe. A polyamide 66 pipe was used as a resin joint. The reinforcement member of First Embodiment as shown in FIG. 9 and FIG. 10 was used as a reinforcement member. The aluminum reinforcement member was used as the reinforcement member.

As shown in Table 1, each metal pipe was subjected to the pretreatment process in No. 2, No. 4, and No. 6. In the pretreatment process, an outer surface of an end portion of the metal pipe was subjected to the roughening process by laser processing. The surface roughness Rz of the roughened outer surface of the end portion of the metal pipe was approximately 100 µm. The metal pipe was not subjected to the pretreatment process in No. 1, No. 3, and No. 5.

As shown in Table 1, each reinforcement member was not attached to a resin joint in No. 1 and No. 2. In No. 3 to No. 6, while the reinforcement member was attached to the resin joint, a timing of attachment of the reinforcement member differs among No. 3 to No. 6. In No. 3 and No. 4, the reinforcement member was attached to the resin joint after the cooling process as described in First Embodiment. In No. 5 and No. 6, the resin joint was pushed toward the metal pipe by locating the reinforcement member outside the resin joint and pressing the reinforcement member from the outside of the reinforcement member during the heating process. As such, the heating process, the pressing process, and the second attachment process were simultaneously performed in No. 5 and No. 6. After that, the resin joint was cooled.

In the heating process, as shown in FIG. 6, a part of the metal pipe was far from the end portion of the metal pipe and heated by a heating device so as to heat an attachment portion between the metal pipe and the resin joint.

In the cooling process, as shown in FIG. 8, cooling gas flowed inside the metal pipe so as to cool the resin joint.

After the manufacture of resin-joint pipes of No. 1 to No. 6, another pipe was connected to each resin-joint pipe so as to obtain a test sample, and the test was conducted as described below.

### (Pressure Resistance Test)

Gas was enclosed in each test sample at room temperature atmosphere for five minutes so that the pressure in the test sample was 3.53 MPa. After that, water whose pressure was 5.30 MPa was enclosed in the test sample. In Table 1, a case with no water leakage is marked as "○", and a case with water leakage is marked as "×". The "water leakage" may be simply referred to as "leakage" in the following description.

### (High-Temperature Repeated Pressurizing Test)

Test oil was enclosed in each test sample, and a pressure ranging of 0 MPa to 3.53 MPa is repeatedly applied into the test sample at an atmosphere of 140 °C on assumption of a difficult situation in a vehicle. This pressurization was repeated 150 thousand times. In Table 1, a case with no oil leakage is marked as "∘", and a case with oil leakage is marked as "×". The "oil leakage" may be simply referred to as "leakage" in the following description.

**[Table 1]**

| No. | TEST CONDITION | | | | | TEST RESULT | |
|---|---|---|---|---|---|---|---|
| | EXISTENCE OF PRETREATMENT PROCESS FOR METAL PIPE | PRETREATMENT PROCESS | EXISTENCE OF HEATING PROCESS | EXISTENCE OF ATTACHMENT OF REINFORCEMENT MEMBER | TIMING OF ATTACHMENT OF REINFORCEMENT MEMBER | PRESSURE RESISTANCE TEST | HIGH-TEMPERATURE REPEATED PRESSURIZING TEST |
| 1 | ABSENCE | - | EXISTENCE | ABSENCE | - | × | × |
| 2 | EXISTENCE | ROUGHENING PROCESS | EXISTENCE | ABSENCE | - | ○ | × |
| 3 | ABSENCE | - | EXISTENCE | EXISTENCE | AFTER COOLING PROCESS | × | × |
| 4 | EXISTENCE | ROUGHENING PROCESS | EXISTENCE | EXISTENCE | AFTER COOLING PROCESS | ○ | ○ |
| 5 | ABSENCE | - | EXISTENCE | EXISTENCE | DURING HEATING PROCESS AND PRESSING PROCESS | × | × |
| 6 | EXISTENCE | ROUGHENING PROCESS | EXISTENCE | EXISTENCE | DURING HEATING PROCESS AND PRESSING PROCESS | ○ | × |

The following facts were found from Table 1.

In No. 1, No.3, and No. 5 where each metal pipe was not subjected to the pretreatment process, leakage occurred during the pressure resistance test and the high-temperature repeated pressurizing test. In No. 3 and No. 5, although the resin-joint pipe was manufactured by the same method as the manufacturing method of First Embodiment except the pretreatment process, leakage occurred during the pressure resistance test and the high-temperature pressurizing test. According to this, when the metal pipe was not subjected to the pretreatment process, the resin joint was peeled off from the metal pipe.

In No. 1 and No. 2 in which each reinforcement member was not attached to a resin joint, leakage occurred during the high-temperature repeated pressurizing test. In No. 2, although the resin-joint pipe was manufactured by the same method as the manufacturing method of First Embodiment except that the reinforcement member was not attached, leakage occurred during the high-temperature pressurizing test. According to this, when the reinforcement member was not attached to the resin joint, the resin joint was peeled off from the metal pipe.

In No. 3 to No. 6, each reinforcement member was attached to a resin joint. In No. 3 and No. 4, the reinforcement member was attached after the cooling process. That is, in No. 3 and No. 4, the reinforcement member was attached to the resin joint after the resin joint was closely in contact with the metal pipe. In No. 3, because the metal pipe was not subjected to the pretreatment process as described above, leakage occurred during the pressure resistance test and the high-temperature repeated pressurizing test. In No. 4, leakage did not occur during the pressure resistance test and the high-temperature repeated pressurizing test. Meanwhile, in No. 5 and No. 6, the second attachment process of attaching the reinforcement member was performed during the heating process of heating the resin joint and the pressing process of pressing the resin joint. After that, the cooling process of cooling the resin joint was performed. That is, in No. 5 and No. 6, the reinforcement member was attached to the resin joint while the resin joint was being brought into close contact with the metal pipe. In No. 5, similarly to No. 3, because the metal pipe was not subjected to the pretreatment process, leakage occurred during the pressure resistance test and the high-temperature repeated pressurizing test. In No. 6, leakage occurred during the high-temperature repeated pressurizing test.

According to No. 3 to No. 6, when (i) the end portion of the metal pipe was subjected to the roughening process and (ii) the reinforcement member was attached to the resin joint while the resin joint was being brought into close contact with the end portion of the metal pipe, the resin joint was peeled off from the metal pipe at a difficult situation such as at a high temperature. Meanwhile, when (i) the end portion of the metal pipe was subjected to the roughening process and (ii) the reinforcement member was attached to the resin joint after the resin joint was closely in contact with the metal joint and the resin joint in close contact with the metal joint was solidified, the resin joint was not peeled off from the metal pipe even at a difficult situation such as at a high temperature.

As described above, when the reinforcement member was attached to the resin joint after (i) the metal pipe was subjected to the pretreatment process and (ii) the resin joint was closely in contact with the metal pipe, the resin-joint pipe was manufactured while high sealing performance between the metal pipe and the resin joint was secured at a difficult situation such as at a high temperature.

Thus, the embodiment of the present invention is described hereinabove. However, the specific structure of the present invention shall not be interpreted as to be limited to the above-described embodiment. Accordingly, the preferred embodiments of the present invention as set forth above are intended to be illustrative, not limiting. Various changes may be made without departing from the spirit and scope of the invention as defined in the following claims.

For example, the reinforcement member (13, 213, 313) may or may not be cylindrical in shape.

A method of heating the attachment portion between the metal pipe (11) and the resin joint (12, 312) is not limited to that in FIG. 6 and FIG. 14.

A method of attaching the reinforcement member (13, 213, 313) to the resin joint (12, 312) is not limited to methods of First Embodiment, Second Embodiment, and Third Embodiment described above.

In Second Embodiment, as shown in FIG. 12, the leading end portion of the reinforcement member 213 is hooked and positioned by one end of the resin joint 12. However, an arrangement of positioning the reinforcement member 213 at the resin joint 12 is not limited to this and may be differently arranged. For example, a recess may be formed between one end and the other end of the resin joint 12 in the axial direction, a protrusion extending inward may be formed between one end and the other end of the reinforcement member 213, and the protrusion of the reinforcement member 213 may be fitted into the recess of the resin joint 12 so that the reinforcement member is hooked and positioned by the resin joint.

In Second Embodiment, the reinforcement member 213 may be pressed toward the resin joint 12 after the reinforcement member 213 is pushed into the resin joint 12 to be positioned.

In Third Embodiment, although the metal pipe 11, the resin joint 312, and the reinforcement member 313 are circular cylindrical in shape, the metal pipe 11, the resin joint 312, and the reinforcement member 313 may be square cylindrical in shape. In First Embodiment and Second Embodiment, the metal pipe 11, the resin joint 12, and the reinforcement member (13, 213) may be circular or square cylindrical in shape.

From a different perspective from the embodiment and modifications above, the resin-joint pipe can be manufactured by applying an adhesive to the outer surface of the end portion of the metal pipe instead of performing the roughening process for the outer surface of the end portion of the metal pipe in the embodiment and modifications above. For example, in Second Embodiment, the end portion 11E of the metal pipe 11 is subjected to the roughening process as shown in FIG. 11. However, in the pretreatment process of Second Embodiment, the resin-joint pipe can be manufactured by applying the adhesive to the end portion 11E of the metal pipe 11 instead of performing the roughening process for the end portion 11E of the metal pipe 11. Also in the pretreatment process of Third Embodiment, the resin-joint pipe can be manufactured by applying the adhesive to the end portion 11E of the metal pipe 11 instead of performing the roughening process for the end portion 11E of the metal pipe 11.

### [Reference Signs List]

1 resin-joint pipe
2 pipe
11 metal pipe
12, 312 resin joint
13, 213, 313 reinforcement member

## Claims

1. A manufacturing method of a resin-joint pipe in which the resin joint is joined with a metal pipe, comprising:
a pretreatment process of performing a roughening process for an outer surface of an end portion of the metal pipe;
a first attachment process of attaching the cylindrical resin joint to the end portion of the metal pipe subjected to the roughening process;
a heating process of heating an attachment portion between the metal pipe and the resin joint while the resin joint is attached to the end portion of the metal pipe;
a pressing process of pressing the resin joint inward toward the metal pipe from the outside of the resin joint while the attachment portion between the metal pipe and the resin joint is heated;
a cooling process of cooling the resin joint after pressing the resin joint inward toward the metal pipe; and
a second attachment process of attaching a reinforcement member to an outer surface portion of the resin joint on the outside of the end portion of the metal pipe after cooling the resin joint, and
the linear expansion coefficient of the reinforcement member being smaller than the linear expansion coefficient of the resin joint.

2. The manufacturing method according to claim 1, wherein, in the heating process, as the metal pipe is heated by a heating device, the attachment portion between the metal pipe and the resin joint is heated.

3. The manufacturing method according to claim 1 or 2, wherein, the reinforcement member is a cylindrical member.

4. The manufacturing method according to claim 1 or 2, wherein, in the second attachment process, the reinforcement member is pressed toward the resin joint in a radial direction of the resin joint so that an inner surface of the reinforcement member is closely in contact with an outer surface of the resin joint.

5. The manufacturing method according to claim 1 or 2, wherein, in the second attachment process, the reinforcement member whose inner diameter is equal to or smaller than the outer diameter of the resin joint is pushed into the resin joint in an axial direction of the resin joint so that the reinforcement member is located outside the resin joint, and thus an inner surface of the reinforcement member is closely in contact with an outer surface of the resin joint.

6. The manufacturing method according to claim 1 or 2, wherein, an outer surface of the resin joint is at least partially tapered so that the outer diameter of the outer surface of the resin joint at least partially increases toward one end of the resin joint in the axial direction,
the reinforcement member is a cylindrical member,
an inner surface of the reinforcement member is at least partially tapered so that the inner diameter of the inner surface of the reinforcement member at least partially increases toward one end of the reinforcement member in the axial direction,
in the second attachment process, the reinforcement member is pushed toward the resin joint so that (i) a direction in which the outer diameter of the resin joint increases is the same as a direction in which the inner diameter of the reinforcement member increases in the axial direction of the resin joint and (ii) the reinforcement member is located outside the resin joint, and thus the inner surface of the reinforcement member is closely in contact with the outer surface of the resin joint.

7. The manufacturing method according to claim 1 or 2, wherein, the metal pipe and the resin joint are circular cylindrical in shape, and
in the pressing process, the resin joint is pressed inward toward the end portion of the metal pipe from the outside of the resin joint in the radial direction of the resin joint while the attachment portion between the metal pipe and the resin joint is heated.
